# EUROPEAN PATENT SPECIFICATION

(11) **EP 2 174 082 B1**
(45) Date of publication and mention of the grant of the patent: **08.07.2020**
(21) Application number: 07810724.0
(22) Date of filing: 24.07.2007
(51) Int. Cl.: F25D 17/06, B60H 1/00, F25D 19/00, B60H 1/32, F25D 17/04

(54) **EVAPORATOR AIR MANAGEMENT SYSTEM FOR TRAILER REFRIGERATION**
VERDAMPFERLUFTVERWALTUNGSSYSTEM FÜR ANHÄNGERKÜHLUNG
SYSTÈME DE GESTION D'AIR D'ÉVAPORATION POUR RÉFRIGÉRATION DE REMORQUE

(43) Date of publication of application: 14.04.2010
(73) Proprietor: Carrier Corporation, Farmington, CT 06034 (US)
(72) Inventor: BUSHNELL, Peter R., Cazenovia, NY 13035 (US)
(74) Representative: Dehns
(86) International application number: PCT/US2007/016631
(87) International publication number: WO 2009/014514

(56) References cited:
- US-A- 2 793 834
- US-A- 2 793 834
- US-A- 4 979 431
- US-A- 5 916 253
- US-A1- 2003 037 912
- US-B1- 6 928 830

## Description

### Technical Field

This invention relates generally to transport refrigeration and, more particularly, to the evaporator air management system of a trailer refrigeration system.

### Background of the Invention

Trailer refrigeration systems are broadly composed a power system, refrigeration circuiting, air management systems and a control system which are all packaged in a unit mounted to the trailer. These systems are configured with a thermal barrier (or pod) that separates the refrigerated trailer side of the unit from the exterior side containing the engine, compressor and condenser. The power system traditionally consists of a diesel engine and mechanical power transfer devices such as shafts, clutches and belt drives. More recently electric generators have been coupled to the diesel engine and power is then transferred to other system components electrically. The basic refrigeration circuit includes the compressor, evaporator heat exchanger, condenser heat exchanger, expansion device, piping and valves. The compressor is driven by the power system either mechanically or electrically as described above, and represents the primary load on the power system. Evaporator and condenser air management systems consist of mechanically or electrically powered (motorized) fans which drive flow through the heat exchangers and other flow-path systems associated with the equipment. The fans generally consume much less power than the compressor, but otherwise represent the remaining significant power load. Design of the air management systems encompasses the coordination of fans, heat exchangers and flow-path arrangement, and the choice of design has a significant affect on the fan power requirement. Finally, the control system includes the hardware (electrical circuiting and sensors) and software necessary to manage all aspects of system operation.

The present invention relates specifically to the evaporator air management system for trailer refrigeration, the function of which is to circulate air through the trailer cargo load and back through the evaporator coil, which subsequently removes heat from the air stream and thereby cools the cargo.

Centrifugal fans are customarily used for trailer evaporator air management, representing the majority of prior art. In the case of the mechanical drive system, a single large centrifugal fan is typically used (however, systems are produced which use a single cross-flow fan). The newer systems which use electrically powered fans also utilize centrifugal fans. Two smaller fans are typically used in these electric systems. In either case, the centrifugal fans are generally encased in scroll housings which improves the fan performance and in some cases provides a natural 90 degree flow turn which can be advantageous. The fans are typically oriented in a draw-through arrangement with the evaporator coil discharging directly into the trailer. Traditional belt drive evaporator fans are generally oriented with the shaft horizontal to reduce mechanical complexity. Electrically powered fans may have a vertical shaft orientation.

The aforementioned centrifugal fan systems tend to occupy a disproportionate amount of space in the trailer refrigeration system, particularly due to their large scroll housings. In many cases this leads to non-optimized coordination with the evaporator heat exchanger and excessive flow losses. Those losses must then be overcome by the fan, leading to excessive fan power consumption. Furthermore, this space problem can be invasive with respect to design of the condenser air management system. That is, less useable space and options are available when designing the condenser air system.

US5916253 discloses a refrigeration unit for use in a trailer container where a pair of centrifugal fans are arranged to draw return air from the cargo container through the evaporator heat exchanger and return conditioned supply air to the cargo container.

Therefore, a real need exists for a compact, high efficiency evaporator air management system arrangement for trailer refrigeration systems. The applicant has developed configurations utilizing single or dual, high speed, electrically powered axial fan arrangements that satisfy that need. The designs are therefore suitable for systems using an engine driven electric generator which can power the fans and/or compressor. The designs incorporate circular to rectangular outlet nozzles with approximately 90 degree flow turning. The designs have been developed using fan and flow-path analysis techniques including three-dimensional computational fluid dynamics. The performance and packaging benefits have also been verified experimentally.

### Disclosure of the Invention

According to the invention, there is provided a trailer refrigeration system, comprising: an evaporator coil and fan; a condenser coil and fan disposed adjacent thereto; and an engine driven generator for providing electrical power to said evaporator fan and condenser fan, wherein said evaporator fan comprises: at least one axial fan having a vertically oriented axis for drawing air through said evaporator coil and discharging it vertically upward; and a nozzle disposed downstream of said axial fan for turning the airflow substantially 90° from its upward flow path, said nozzle transitioning while turning 90° from a circular inlet cross-section to a wide-aspect ratio rectangular outlet cross-section.

By another aspect of the invention, a pair of side-by-side axial fans may be used or a single fan/nozzle can be used and can be placed in the center or off-set transversely in the system.

By another aspect of the invention, the fan is specifically of the vane-axial type, incorporating outlet guide vanes.

In the drawings as hereinafter described, a preferred embodiment is depicted; however, various other modifications and alternate constructions can be made thereto without departing from the scope of the invention, which is defined by the claims.

### Brief Description of the Drawings

FIG. 1 is a rear perspective view of a trailer refrigeration unit in accordance with the prior art.
FIG. 2 is another rear perspective view of a portion thereof in accordance with the prior art.
FIG. 3 is a rear perspective view of an evaporator air system with an axial fan and nozzle configuration in accordance with the present invention.
FIG. 4 is a perspective cut away view of an evaporator air system with an axial fan and nozzle in accordance with the present invention.
FIG. 5 is a side cross sectional view thereof.
FIG. 6 is an isometric line drawing thereof in accordance with the invention.
FIG. 7 is an isometric line drawing in accordance with another embodiment of the invention.

### Detailed Description of the Invention

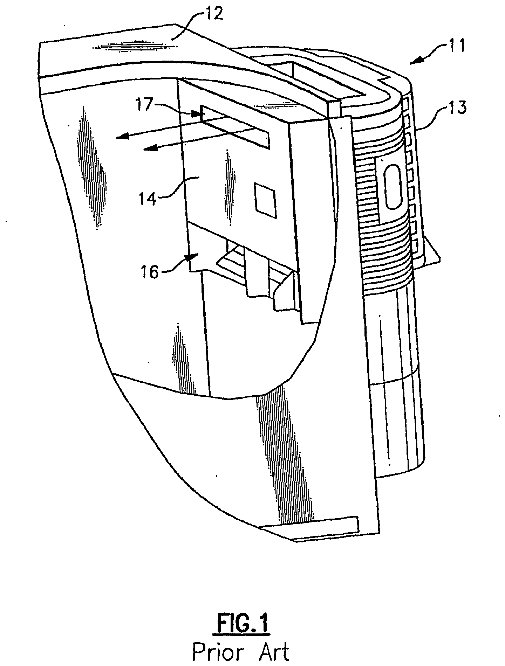

A truck trailer refrigeration system in accordance with the prior art is shown at 11 in Fig. 1 as mounted to the front end of a truck trailer 12. The system 11 includes an exterior section 13 and interior section 14. The exterior section 13 includes a condenser and a fan for circulating ambient air therethrough for the purpose of condensing the refrigerant in the system.

In the interior section 14, which is located on the interior of the trailer, an evaporator coil is provided, together with the fan or fans for drawing air through the coil. The return air from the trailer is therefore drawn into the opening 16 passed through the evaporator coil to be cooled and is then blown out of a top opening 17 to be circulated rearwardly in the truck trailer 12 to cool the cargo therein.

While both the condenser fans and the evaporator fans have generally been belt driven by the system engine located in the lower portion of the exterior section 13, a more recently implemented approach has been to directly drive a generator by the system engine, and then provide electrical power to drive the centrifugal evaporator fans.

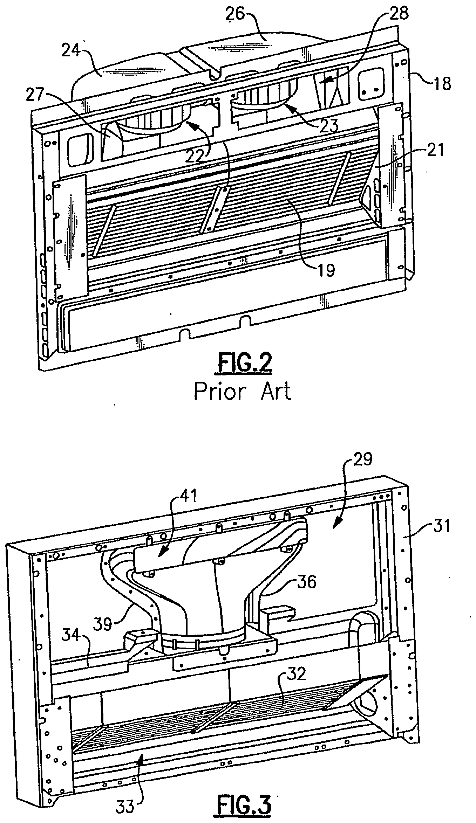

Shown in Fig. 2 is an example of a prior art evaporator section 18 with an evaporator coil 19 placed in a generally horizontal disposition but preferable at an incline as shown, and exposed to an opening 21 which fluidly communicates with the opening 16 as shown in Fig. 1. Near the top of the evaporator section 18 are disposed a pair of electrically powered centrifugal fans 22 and 23 with respective scroll casings 24 and 26. Behind the fans 22 and 23 are respective openings 27 and 28 which fluidly communicate with the openings 17 as shown in Fig. 1. In operation, the fans 22 and 23 draw in air through the opening 16 and cause it to pass through the evaporator coil 19 to be cooled, after which it is discharged by the fans 22 and 23 from the opening 17 for distribution within the trailer 12.

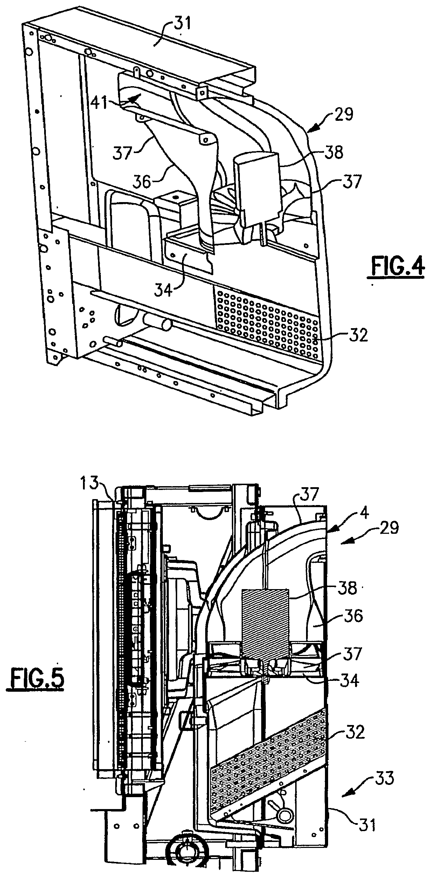

An evaporator fan arrangement in accordance with the present invention is shown in Figs 3-6 as installed in an evaporator section 31. Rather than using centrifugal fans as in the prior art, a single axial flow fan is provided, along with an associated nozzle.

The evaporator coil 32 is disposed in a lower portion of the evaporator section 31 and is preferably placed at an angle as shown to increase the effective surface area and assist in condensate drainage. Inlet opening 33 is provided for the inward flow of return air from the interior of the trailer unit.

Mounted on a support deck 34 is the fan and nozzle unit 36. Mounted in the bottom of the fan and nozzle 36 is an axial fan 37 and its electric drive motor 38, with their axes being vertically oriented, and with the drive motor 38 disposed above the axial fan 37. The axial fan is of the vane-axial type, incorporating outlet guide vanes.

The nozzle 39 is, of course, round near its lower end so as to surround the axial fan 37. As it rises upwardly from the circular lower end, it decreases in cross sectional area and gradually transitions from the circular shape to a wide aspect ratio rectangular cross section while turning 90° to an opening 41 facing rearwardly. The opening 41 has a width to height ratio which is greater than 3 in order to maintain the consistent airflow pattern that will carry through into the trailer.

Although the fan and nozzle unit 36 has been shown as being centrally located within the evaporator section 31, it should be understood that it may be placed in a laterally offset position to either side of the centerline for a particular desired application. For example, such an offset position may accommodate the installation of other components in one side or the other thereof.

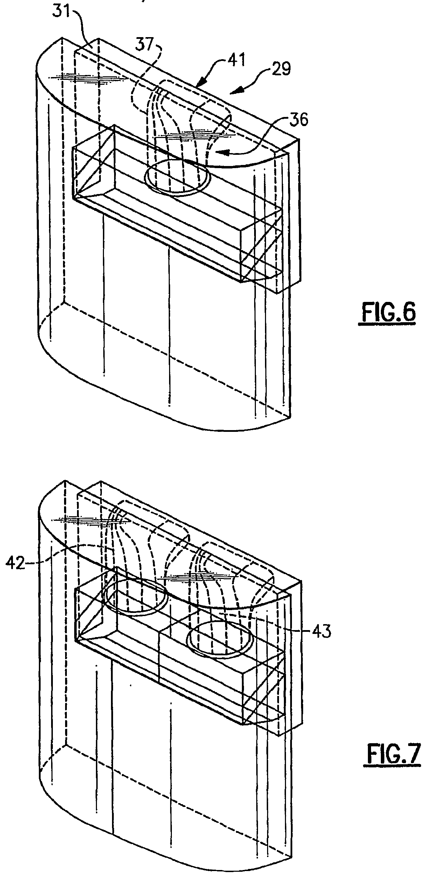

Referring now to Fig. 7, an alternative embodiment provides for a pair of fan and nozzle units 42 and 43 in side-by-side relationship as shown. Each would operate in the same manner as the unit 36 as described hereinabove, but with the two units cooperating to draw in return air and deliver cooled air to the trailer unit.

While the present invention has been particularly shown and described with reference to the particular exemplarily embodiment as illustrated in the drawings, it will be understood by one skilled in the art that various modifications or changes, some of which had been discussed herein, may be affected therein without departing from the spirit and scope of the invention.

## Claims

1. A trailer refrigeration system, comprising:
an evaporator coil (32) and fan (37);
a condenser coil and fan disposed adjacent thereto; and
an engine driven generator for providing electrical power to said evaporator fan and condenser fan,
**characterized in that**
said evaporator fan (37) comprises:
at least one axial fan having a vertically oriented axis for drawing air through said evaporator coil (32) and discharging it vertically upward; and
a nozzle (39) disposed downstream of said axial fan (37) for turning the airflow substantially 90° from its upward flow path, said nozzle transitioning while turning 90° from a circular inlet cross-section to a wide-aspect ratio rectangular outlet cross-section.

2. A trailer refrigeration system as set forth in claim 1, wherein said at least one axial fan comprises a pair of axial fans (43) disposed in transverse side-by-side relationship in said system.

3. A trailer refrigeration system as set forth in claim 1, wherein said at least one axial fan comprises a single fan (37) which is offset transversely to one side of said system.

4. A trailer refrigeration system as set forth in any preceding claim, wherein said wide-aspect ratio rectangular outlet cross-section has a width to height ratio greater than 3.

5. A trailer refrigeration system as set forth in any preceding claim, wherein said axial fan (37; 43) is a vane-axial fan with outlet guide vanes.

6. A truck-trailer refrigeration system including a trailer refrigeration system as set forth in any preceding claim.

## Patentansprüche

1. Anhängerkühlungssystem, umfassend:
eine Verdampferschlange (32) und einen -lüfter (37);
eine Kondensatorschlange und einen -lüfter, die angrenzend daran angeordnet sind; und
einen motorgetriebenen Generator zum Bereitstellen von elektrischer Leistung für den Verdampferlüfter und den Kondensatorlüfter,
**dadurch gekennzeichnet, dass** der Verdampferlüfter (37) Folgendes umfasst:
mindestens einen Axiallüfter, der eine vertikal ausgerichtete Achse zum Ansaugen von Luft durch die Verdampferschlange (32) und zum Ausstoßen vertikal nach oben aufweist; und
eine Düse (39), die stromabwärts des Axiallüfters (37) zum Drehen des Luftstroms im Wesentlichen um 90° von seinem steigenden Strömungsweg angeordnet ist, wobei die Düse beim Drehen um 90° von einem kreisförmigen Einlassquerschnitt zu einem rechtwinkligen Auslassquerschnitt mit Breitformat übergeht.

2. Anhängerkühlungssystem nach Anspruch 1, wobei der mindestens eine Axiallüfter ein Paar von Axiallüftern (43) umfasst, die quer nebeneinander in dem System angeordnet sind.

3. Anhängerkühlungssystem nach Anspruch 1, wobei der mindestens eine Axiallüfter einen einzelnen Lüfter (37) umfasst, der quer zu einer Seite des Systems versetzt ist.

4. Anhängerkühlungssystem nach einem der vorstehenden Ansprüche, wobei der rechtwinklige Auslassquerschnitt mit Breitformat ein Verhältnis von Breite zu Höhe von größer als 3 aufweist.

5. Anhängerkühlungssystem nach einem der vorstehenden Ansprüche, wobei der Axiallüfter (37; 43) ein Axiallüfter mit Leitschaufeln mit Auslassleitschaufeln ist.

6. LKW-Anhängerkühlungssystem, beinhaltend ein Anhängerkühlungssystem nach einem der vorstehenden Ansprüche.

## Revendications

1. Système de réfrigération de remorque, comprenant :
un serpentin (32) et un ventilateur (37) d'évaporateur ;
un serpentin et un ventilateur de condenseur disposés à côté de celui-ci ; et
un générateur entraîné par moteur pour fournir de l'énergie électrique auxdits ventilateur d'évaporateur et ventilateur de condenseur,
**caractérisé en ce que** ledit ventilateur (37) d'évaporateur comprend :
au moins un ventilateur axial ayant un axe orienté verticalement pour aspirer de l'air à travers ledit serpentin (32) d'évaporateur et l'évacuer verticalement vers le haut ; et
une buse (39) disposée en aval dudit ventilateur (37) axial pour faire tourner l'écoulement d'air sensiblement à 90° par rapport à son trajet d'écoulement vers le haut, ladite buse passant d'une section d'entrée circulaire à une section de sortie rectangulaire à grand rapport de forme tout en tournant à 90°.

2. Système de réfrigération de remorque selon la revendication 1, dans lequel ledit au moins un ventilateur axial comprend une paire de ventilateurs axiaux (43) disposés en relation transversale côte à côte dans ledit système.

3. Système de réfrigération de remorque selon la revendication 1, dans lequel ledit au moins un ventilateur axial comprend un ventilateur (37) unique qui est décalé transversalement à un côté dudit système.

4. Système de réfrigération de remorque selon une quelconque revendication précédente, dans lequel ladite section de sortie rectangulaire à grand rapport de forme a un rapport largeur/hauteur supérieur à 3.

5. Système de réfrigération de remorque selon une quelconque revendication précédente, dans lequel ledit ventilateur axial (37 ; 43) est un ventilateur axial à aubes avec aubes directrices de sortie.

6. Système de réfrigération de camion-remorque comportant un système de réfrigération de remorque selon une quelconque revendication précédente.
